(19) Europäisches Patentamt
European Patent Office
Office européen des brevets

(11) **EP 4 317 322 A1**

(12) **EUROPEAN PATENT APPLICATION**
published in accordance with Art. 153(4) EPC

(43) Date of publication:
**07.02.2024 Bulletin 2024/06**

(21) Application number: 22780635.3

(22) Date of filing: **25.03.2022**

(51) International Patent Classification (IPC):
*C08L 83/07* (2006.01)     *C08L 83/05* (2006.01)
*C09K 5/14* (2006.01)     *H01M 10/613* (2014.01)
*H01M 10/651* (2014.01)     *H01M 10/653* (2014.01)

(52) Cooperative Patent Classification (CPC):
**C08L 83/04; C09K 5/14; H01M 10/613;**
**H01M 10/651; H01M 10/653;** Y02E 60/10

(86) International application number:
**PCT/JP2022/014659**

(87) International publication number:
**WO 2022/210422 (06.10.2022 Gazette 2022/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.03.2021 JP 2021061809**

(71) Applicant: Sekisui Polymatech Co., Ltd.
**Saitama-city, Saitama 338-0837 (JP)**

(72) Inventors:
• IWAMOTO, Tatsuya
**Saitama-city, Saitama 338-0837 (JP)**
• KITADA, Gaku
**Saitama-city, Saitama 338-0837 (JP)**
• KANEKO, Toshiki
**Saitama-city, Saitama 338-0837 (JP)**
• SATO, Daichi
**Saitama-city, Saitama 338-0837 (JP)**

(74) Representative: **Ter Meer Steinmeister & Partner**
**Patentanwälte mbB**
**Nymphenburger Straße 4**
**80335 München (DE)**

(54) **HEAT-CONDUCTIVE COMPOSITION, HEAT-CONDUCTIVE MEMBER, AND BATTERY MODULE**

(57)     The present invention provides a thermally conductive composition comprising (A) an organopolysiloxane containing at least two alkenyl groups, (B) a hydrogenorganopolysiloxane containing at least two hydrosilyl groups, (C) a thermally conductive filler, and (D) a reaction rate controlling agent, wherein in measurement using a viscoelasticity measuring apparatus under conditions of 35°C, a shear mode, a frequency of 1 Hz, and a strain of 10%, a storage modulus G'1 after 3,600 seconds from the start of the measurement is 2,000 Pa or less, and a storage modulus G'2 after 7,200 seconds from the start of the measurement is 4,350 Pa or more, and wherein viscosity measured at 25°C and a shear rate of 10 rpm is 220 Pa·s or less. According to the present invention, it is possible to provide the thermally conductive composition that has good workability and maintains reliability as a product, over a relatively wide temperature range.

EP 4 317 322 A1

**Description**

Technical Field

The present invention relates to a thermally conductive composition, a thermally conductive member, and a battery module using the thermally conductive member as a gap filler.

Background Art

A cured product formed by filling a curable thermally conductive composition between a heating element and a heat sink and then curing it has been used as a thermally conductive member that transfers heat generated from the heating element to the heat sink. The curable thermally conductive composition can fill an arbitrary gap between the heating element and the heat sink because it has fluidity. Therefore, the thermally conductive member to be formed can reliably fill the gap even if the gap between the heating element and the heat sink is not constant, and has been used as a thermally conductive gap filler.

A room temperature-curable thermally conductive composition is used as the gap filler for heat dissipation in a lithium-ion battery (e.g., Patent Literature 1). Specifically, it is used to be filled between a battery cell which is the heating element and a module case which stores the battery cell, or between a battery module and a cooling plate.

It has been reported that for such a thermally conductive composition, the rate of a curing reaction can be controlled by adjusting combination of a catalyst or a reaction retardant, thereby preventing it from peeling off or the like from an adherend (e.g., Patent Literature 2).

Citation List

Patent Literature

PTL.1: WO 2018/173860
PTL.2: JP 2005-206733 A

Summary of Invention

Technical Problem

However, after applying the thermally conductive composition to the heating element and the heat sink, control of a curing rate of the thermally conductive composition is often insufficient, from a viewpoint of ensuring a certain level of workability and product reliability.

The thermally conductive composition is made to maintain a soft state and compressed to a desired thickness even after a lapse of a certain period of time after application (filling), to be enable assembly in subsequent processes. Here, making the soft state means a cured state to the extent that it does not provide fluidity, and softer than a final attained hardness.

Reasons why requiring such a state is because it is preferable to reach the hardness (e.g., E 20-E 70) that provides with some stiffness finally, while during the assembly it is preferable to be softer than that.

Therefore, it is important to appropriately control the curing rate of the thermally conductive composition.

When the thermally conductive composition is slow to cure, there is concern that gaps may be created between the heat sink and the heating element, or that vibrations or the like may cause misalignment between the heating element and the heat sink, because the fluidity after the lapse of the certain period of time is high after filling it between the heating element and the heat sink. If this kind of thing occurs, the product reliability will be reduced.

On the other hand, when the thermally conductive composition is fast to cure, the time in which the softness can be maintained is shortened, and thus the time in which work of compressing it to the desired thickness described above can be performed is shortened, to deteriorate the workability. Furthermore, when performing the assembly in the subsequent processes, a large load is applied to the heat sink and the heating element during compression of the thermally conductive composition, which will be in danger of deforming of the heat sink and the heating element.

In addition, since the curing rate of the thermally conductive composition varies depending on an ambient temperature, it is prone to cause different problems depending on the seasons. For example, when the ambient temperature is high, such as in summer, the curing rate tends to be faster, and it is prone to cause the problems of deteriorated workability, such as inability to work compressing it to the desired thickness, as described above. On the other hand, when the ambient temperature is low, such as in winter, the curing rate slows down, resulting in the misalignment in arrangement of the heating element and the heat sink, as described above, tending to reduce the product reliability.

Therefore, an objective of the present invention is to provide a thermally conductive composition that has good workability and maintains reliability as a product, over a relatively wide temperature range, when filling the thermally conductive composition into the adherend such as the heating element or the heat sink.

More specifically, from a viewpoint of good workability even in summer, the objective is to provide the thermally conductive composition in which a ratio of viscosity after a lapse of 6 hours at 25°C after the composition is prepared to initial viscosity is a certain value or less (e.g., 2 or less). In addition to this, furthermore, from the viewpoint of ensuring the product reliability even in winter, the objective is to provide the thermally conductive composition to be capable of curing to the extent that the misalignment from the adherend does not occur after the composition is prepared and applied to the adherend and 18 hours have elapsed at 18°C.

In the present description, a property of the thermally conductive composition in which the ratio of viscosity after a lapse of 6 hours at 25°C to the initial viscosity is the certain level or less, may be described simply as a "low viscosity maintaining property". In addition, the property of the thermally conductive composition which can be cured to the extent that the misalignment from the adherend is unlikely to occur after a lapse of 18 hours at 18°C may be described simply as "curability over time".

Solution to Problem

As a result of intensive studies, the present inventors have found that in a thermally conductive composition comprising (A) an organopolysiloxane containing at least two alkenyl groups, (B) a hydrogenorganopolysiloxane containing at least two hydrosilyl groups, (C) a thermally conductive filler, and (D) a reaction rate controlling agent, the above problems can be solved by setting the viscosity at 25°C, and a storage modulus after 3,600 seconds and 7,200 seconds from the start of measurement at 35°C at a specific range, and have completed the present invention. That is, the present invention provides the following [1] to [6].

[1] A thermally conductive composition comprising (A) an organopolysiloxane containing at least two alkenyl groups, (B) a hydrogenorganopolysiloxane containing at least two hydrosilyl groups, (C) a thermally conductive filler, and (D) a reaction rate controlling agent, wherein in measurement using a viscoelasticity measuring apparatus, under conditions of 35°C, a shear mode, a frequency of 1 Hz, and a strain of 10%, a storage modulus G'1 after 3,600 seconds from the start of the measurement is 2,000 Pa or less, and a storage modulus G'2 after 7,200 seconds from the start of the measurement is 4,350 Pa or more, and wherein viscosity measured at 25°C and the number of revolutions of 10 rpm is 220 Pa·s or less.

[2] The thermally conductive composition according to the above [1], wherein in a compressive load test, a ratio of a compressive load after the composition is left to stand at 35°C for 1 hour to an initial compressive load is 145% or less, and a ratio of the compressive load after the composition is left to stand at 18°C for 18 hours to the initial compressive load is 820% or more.

[3] The thermally conductive composition according to the above [1] or [2], further comprising an alkoxysilane compound.

[4] The thermally conductive composition according to any one of the above [1] to [3], further comprising a thixotropic agent.

[5] A thermally conductive member made by curing the thermally conductive composition according to any one of the above [1] to [4].

[6] A battery module comprising a gap filler composed of the thermally conductive member according to the above [5], a plurality of battery cells, and a module housing for storing the plurality of the battery cells, wherein the gap filler is arranged inside the module housing.

Advantageous Effects of Invention

According to the present invention, it is possible to provide a thermally conductive composition that has good workability and maintains reliability as a product, over a relatively wide temperature range.

Brief Description of Drawings

[Fig. 1] Fig. 1 is a diagrammatic perspective view showing a typical configuration of a battery module according to the present invention.

[Fig. 2] Fig. 2 is a diagrammatic perspective view showing a typical configuration of a battery cell contained in the battery module.

Description of Embodiments

[Thermally Conductive Composition]

Hereinafter, a thermally conductive composition of the present invention will be described in detail.

A thermally conductive composition comprising (A) an organopolysiloxane containing at least two alkenyl groups, (B) a hydrogenorganopolysiloxane containing at least two hydrosilyl groups, (C) a thermally conductive filler, and (D) a reaction rate controlling agent, wherein in measurement using a viscoelasticity measuring apparatus, under conditions of 35°C, a shear mode, a frequency of 1 Hz, and a strain of 10%, a storage modulus G'1 after 3,600 seconds from the start of the measurement is 2,000 Pa or less, a storage modulus G'2 after 7,200 seconds from the start of the measurement is 4,350 Pa or more, and viscosity measured at 25°C and the number of revolutions of 10 rpm is 220 Pa·s or less.

<Storage modulus>

The thermally conductive composition of the present invention has 2,000 Pa or less of the storage modulus G'1 after 3,600 seconds from the start of the measurement, in the measurement using the viscoelastic measuring apparatus under the conditions of 35°C, the shear mode, a frequency of 1 Hz, and a strain of 10%. If the storage modulus G'1 is more than 2,000 Pa, a low viscosity maintaining property of the thermally conductive composition is lowered, to deteriorate workability. The storage modulus G'1 is preferably 1,800 Pa or less, more preferably 1,600 Pa or less. A lower limit of the storage modulus G'1 is not limited, but is, e.g., 100 Pa.

The thermally conductive composition of the present invention has 4,350 Pa or more of the storage modulus G'2 after 7,200 seconds from the start of the measurement, in the measurement using the viscoelastic measuring apparatus under the conditions of 35°C, the shear mode, a frequency of 1 Hz, and a strain of 10%s. If the storage modulus G'2 is less than 4,350 Pa, the thermally conductive composition will deteriorate in curability over time, to make it difficult to ensure reliability as a product. The storage modulus G'2 is preferably 4,500 Pa or more, more preferably 5,000 Pa or more. An upper limit of the storage modulus G'2 is not limited, but is, e.g., 50,000 Pa.

These storage moduli G'1 and G'2 can be adjusted by a type, an amount, and the like of the reaction rate controlling agent included in the thermally conductive composition, in addition, can be adjusted by a type, an amount of the reaction curable silicone such as the (A) component and the (B) component, and by a type, an amount, and the like of a non-reactive silicone and an alkoxysilane compound blended as necessary.

The thermally conductive composition of the present invention has preferably 300 Pa or less of the storage modulus G'0 after 600 seconds from the start of the measurement, in the measurement using the viscoelastic measuring apparatus under the conditions of 35°C, the shear mode, a frequency of 1 Hz, and a strain of 10%, more preferably 200 Pa or less, even more preferably 100 Pa or less. Setting the storage modulus G'0 at such ranges provides good fillability when filling the thermally conductive composition between the heating element and the heat sink.

Also, the storage modulus should be measured immediately after the thermally conductive composition is prepared. For example, as described later, when the thermally conductive composition is a two-component type composed of a first agent and a second agent, the measurement of the storage modulus should be started immediately after the thermally conductive composition is prepared by mixing the first agent and the second agent.

<Compressive load>

It is preferable that the thermally conductive composition of the present invention has 145% or less of a ratio of a compressive load after the composition is left to stand at 35°C for 1 hour to an initial compressive load in a compressive load test. This provides a good low viscosity maintaining property of the thermally conductive composition, to improve the workability. The ratio of the compressive load after the composition is left to stand at 35°C for 1 hour to the initial compressive load is more preferably 130% or less, even more preferably 120% or less.

Also, the ratio (%) of the compressive load (N) after the composition is left to stand at 35°C for 1 hour to the initial compressive load (N) is calculated by the following expression:

$$100 \times (\text{Compressive load after a lapse of 1 hour at } 35°C) \,/\, (\text{Initial compressive load})$$

It is preferable that, with the thermally conductive composition of the present invention, the ratio of the compressive load after the composition is left to stand at 18°C for 18 hours to the initial compressive load is 820% or more in the compressive load test. This provides good curability of the thermally conductive composition, to improve product reliability. The ratio of the compressive load after the composition is left to stand at 18°C for 18 hours to the initial compressive load is more preferably 900% or more, even more preferably 1,000% or more.

Also, the ratio (%) of the compressive load (N) after the composition is left to stand at 18°C for 18 hours to the initial compression load (N) is calculated by the following expression:

$$100 \times (\text{Compressive load after a lapse of 18 hours at 18°C}) / (\text{Initial compressive load})$$

The compressive load is measured as follows.

Immediately after preparation of the thermally conductive composition, $5.75 \pm 0.25$ g is discharged onto a stage for a compression test in a universal testing machine (e.g., Strograph produced by Toyo Seiki Seisaku-sho, Ltd.), and a compression test is performed on that discharge.

When measuring the initial compressive load, the compression test is immediately performed on the discharge which is discharged. When measuring the compressive load after being left to stand at 35°C for 1 hour, the compression test is performed after the discharge which is discharged is left to stand at 35°C for 1 hour. When measuring the compressive load after being left to stand at 18°C for 18 hours, the compression test is performed after the discharge which is discharged is left to stand at 18°C for 18 hours.

With respect to the compression test, the discharge is compressed by a plunger of 40 mmΦ (a jig for the compression test) at 60 mm/min of a compression speed, and when a gap between the jigs is compressed to 0.665 mm, a load value is read, which is a compressive load. Temperatures at which the compression tests are performed are 35°C when measuring the compressive load after being left to stand at 35°C for 1 hour, 18°C when measuring the compressive load after being left to stand at 18°C for 18 hours, and 22°C when measuring the initial compression load.

<Viscosity>

The thermally conductive composition of the present invention has 220 Pa·s or less of the viscosity, measured at 25°C and the number of revolutions of 10 rpm. When the viscosity exceeds 220 Pa s, the fillability at filling the thermally conductive composition between the heating element and the heat sink is poor. From a viewpoint of enhancing the fillability, the above viscosity is preferably 200 Pa·s or less, more preferably 180 Pa·s or less.

<Silicone-based material>

(A component, B component)

The thermally conductive composition of the present invention includes the (A) organopolysiloxane containing at least two alkenyl groups (hereinafter also referred to as the (A) component) and the (B) hydrogenorganopolysiloxane containing at least two hydrosilyl groups (hereinafter also referred to as the (B) component).

Further, in the present description, the (A) component and the (B) component are sometimes referred to as reaction curable silicones.

The (A) component and the (B) component are generally used as a base resin and a curing agent, respectively. The (A) component and the (B) component are reacted through an addition reaction to form a cured product that is a matrix composed of silicone rubber. Because the silicone rubber is easily subjected to compressive deformation, a thermally conductive member formed from the thermally conductive composition of the present invention becomes to be easy to assemble between the heating element and the heat sink.

The (A) component is not limited as long as it is an organopolysiloxane containing at least two alkenyl groups in one molecule. The number of the alkenyl groups in one molecule in the (A) component is preferably 2 to 20, more preferably 2 to 10.

Examples of the alkenyl groups in the (A) component include, e.g., those having 2 to 8 carbon atoms, and such as a vinyl group, an allyl group, a butenyl group, a pentenyl group, a hexenyl group, a heptenyl group, and an octenyl group.

One type of the (A) component may be used alone, or two or more may be used in combination.

The (B) component is not limited as long as it is a hydrogenorganopolysiloxane containing at least two hydrosilyl groups in one molecule. The hydrosilyl group means a hydrogen atom bound to a silicon atom (a SiH group). The number of the hydrosilyl groups in one molecule in the (B) component is preferably 2 to 100, and more preferably 2 to 50.

One type of the (B) component may be used alone, or two or more may be used in combination.

It is preferable that the (B) component include the (B2) hydrogenorganopolysiloxane containing the hydrosilyl group at a proportion of 2 mmol/g or more (hereinafter also referred to as (B2) component). This will speed up a rate at which the storage modulus of the thermally conductive composition increases, making it easier to adjust the modulus to the desired value within a predetermined time.

The proportion of the hydrosilyl group contained in the (B2) component is preferably 3 mmol/g or more, and more preferably 4 mmol/g or more.

From a viewpoint of facilitating adjustment of the storage modulus G'1 and the storage modulus G'2 of the thermally conductive composition to the desired values, a content of the (B2) component is preferably 0.1 to 10 parts by mass, more preferably 0.2 to 5 parts by mass, even more preferably 0.3 to 3 parts by mass, with respect to 100 parts by mass of a total of silicone-based materials included in the thermally conductive composition. Here, the silicone-based materials in the present description mean compounds having a polysiloxane structure, for example, the above-described (A) component, (B) component, and the non-reactive silicone blended as necessary are the silicone-based materials.

It is preferable that the (A) component and the (B) component are in a liquid state before curing. The liquid state before the curing facilitates high filling of the thermally conductive filler. In the present description, the liquid state means liquid at room temperature (23°C) and under 1 atmospheric pressure. The addition reaction between the (A) component and the (B) component is preferably performed in the presence of an addition reaction catalyst, and the addition reaction catalyst is preferably a platinum catalyst.

(Non-reactive silicone)

The thermally conductive composition of the present invention may include the non-reactive silicone other than the above-described reaction-curable silicone as the silicone material. Including the non-reactive silicone imparts softness, to easily adjust the above-described storage moduli G'1 and G'2 to the desired ranges.

Examples of the non-reactive silicone include straight silicone oils such as a dimethyl silicone oil and a methylphenyl silicone oil, as well as non-reactive modified silicone oils in which a non-reactive organic group is introduced into a main chain having a siloxane bond, a side chain bound to the main chain, or an end of the main chain. Examples of the non-reactive modified silicone oils include, e.g., a polyether-modified silicone oil, an aralkyl-modified silicone oil, a fluoroalkyl-modified silicone oil, a long-chain alkyl-modified silicone oil, a higher fatty acid ester-modified silicone oil, a higher fatty acid amide-modified silicone oil, and a phenyl-modified silicone oil. Among of the above, the straight silicone oils are preferable as the non-reactive silicone, and the dimethyl silicone oil is more preferable among the straight silicone oils. One of the above non-reactive silicone oils may be used alone, or two or more may be used in combination.

A content of the non-reactive silicone is not limited, but is preferably 5 to 60 parts by mass, more preferably 10 to 50 parts by mass, even more preferably 20 to 40 parts by mass with respect to 100 parts by mass of the silicone-based materials.

<(C) component>

The thermally conductive composition of the present invention includes the (C) thermally conductive filler. Including the (C) thermally conductive filler improves thermally conductive properties of the thermally conductive member formed from the thermally conductive composition.

Examples of the (C) thermally conductive filler include, e.g., metal, metal oxide, metal nitride, metal hydroxide, a carbon material, and oxide, nitride, and carbide other than the metal, etc. Further, examples of a shape of the (C) thermally conductive filler include a sphere, an irregular form, etc. in the powder.

In the (C) thermally conductive filler, examples of the metal include aluminum, copper, nickel, etc.; examples of the metal oxide include aluminum oxide as typified by alumina, magnesium oxide, zinc oxide, etc.; and examples of the metal nitride include aluminum nitride and the like. Examples of the metal hydroxide include aluminum hydroxide. Furthermore, examples of the carbon material include spherical graphite and the like. Examples of the oxide, the nitride, and the carbide other than the metal include quartz, boron nitride, silicon carbide, etc. Among these, the aluminum oxide is preferable from the viewpoint of improving heat dissipation of the thermally conductive member, and the aluminum hydroxide is preferable when flame retardance is desired to be improved.

The (C) thermally conductive filler may be used alone of those described above, or two or more may be used in combination.

An average particle size of the (C) thermally conductive filler is preferably 0.1 to 200 μm, more preferably 0.5 to 100 μm, even more preferably 1 to 70 μm.

As to the (C) thermally conductive filler, it is preferable that a small particle size thermally conductive filler having 0.1 μm or more and 5 μm or less of the average particle size and a large particle size thermally conductive filler having

more than 5 $\mu$m and 200 $\mu$m or less of the average particle size are used in combination. Using the thermally conductive fillers having a different average particle size can increase a filling rate.

Further, the average particle size of the (C) thermally conductive filler can be measured through observation with an electron microscope or the like. More specifically, the particle sizes of 50 arbitrary particles of the (C) thermally conductive filler are measured by using, e.g., the electron microscope or an optical microscope, and an average value thereof (an arithmetic average value) can be adopted as the average particle size.

A content of the (C) thermally conductive filler is preferably 150 to 3,000 parts by mass, more preferably 200 to 2,000 parts by mass, even more preferably 300 to 1,000 parts by mass, with respect to 100 parts by mass of the silicone-based materials. The content of the (C) thermally conductive filler at the above lower limit or more allows a certain level of the thermally conductive properties to be imparted to the thermally conductive member. The content of the (C) thermally conductive filler at the above upper limit or less allows the (C) thermally conductive filler to be appropriately dispersed in the thermally conductive member. This can also prevent the viscosity of the thermally conductive composition from becoming higher than necessary.

<(D) component>

The thermally conductive composition of the present invention includes the reaction rate controlling agent. Including the reaction rate controlling agent facilitates the adjustment of the storage moduli G'1 and G'2 to the desired values described above.

The reaction rate controlling agent is one that suppresses the addition reaction between the alkenyl group of the (A) component and the hydrosilyl group of the (B) component, and one that is used in combination with the reaction curable silicone in general can be used with no limitation, but one that exhibits a certain weight loss in thermogravimetric measurement as below can be used suitably.

In the thermogravimetric measurement, 50 mg of the reaction rate controlling agent is used as a sample, and under conditions where a temperature is raised from room temperature (25°C) to 35°C at 4°C/minute of a heating rate under a nitrogen atmosphere, and then held at a constant temperature of 35°C until 120 minutes have elapsed from the start of raising temperature, when the weight after 60 minutes from the start of measurement is $W_{60}$ and the weight after 120 minutes is $W_{120}$, it is preferable that $W_{60}$-$W_{120}$ is 0.3 mg or more.

When $W_{60}$-$W_{120}$ is 0.3 mg or more, the reaction rate controlling agent has a certain volatility, which allows the thermally conductive composition to cure from a surface where the reaction rate controlling agent volatilizes, and the surface is more preferentially cured without increasing the overall curing rate. This helps to ensure the product reliability.

$W_{60}$-$W_{120}$ is preferably 1.0 mg or less. Since the reaction rate controlling agent with 1.0 mg or less of $W_{60}$-$W_{120}$ has a moderate volatilization rate, over-curing of the thermally conductive composition is suppressed, to ensure a certain level of workability.

Although there is no restriction on the type of the reaction rate controlling agent, it is preferable that it is the reaction rate controlling agent having an acetylene moiety (the reaction rate controlling agent having a carbon-carbon triple bond). It is also preferable that it is the reaction rate controlling agent having a silicon atom and having the acetylene moiety. Furthermore, it is more preferable that it is the reaction rate controlling agent having an electron-withdrawing atom in a $\beta$-position to the acetylene moiety (acetylene group). Such compounds include, for example, the reaction rate controlling agent in which the hydrosilyl group (in which an electron-withdrawing oxygen atom is at the $\beta$-position) is bound to the carbon atom or the silicon atom to which the acetylene group is bound.

A content of the reaction rate controlling agent should be appropriately adjusted depending on the type of the reaction rate controlling agent, but with respect to 100 parts by mass of the silicone-based materials, it is preferable that the content is, e.g., 0.05 to 3 parts by mass.

Especially, it is preferable that the reaction rate controlling agent, of which $W_{60}$-$W_{120}$ is 0.3 mg or more and 1.0 mg or less, is included by preferably 0.05 to 1 parts by mass, more preferably 0.1 to 0.8 parts by mass, with respect to 100 parts by mass of the silicone-based materials. This makes it easier to achieve both of the low viscosity maintaining property and the curability, to easily ensure the workability and the product reliability.

<Alkoxysilane compound>

It is preferable that the thermally conductive composition of the present invention includes the alkoxysilane compound. Including the alkoxysilane compound improves dispersibility of the thermally conductive filler in the composition. In addition, including the alkoxysilane compound facilitates lowering the storage modulus G'1, to make the workability good.

The alkoxysilane compound is a compound having a structure in which 1 to 3 of 4 bonds possessed by the silicon atom (Si) are bound to an alkoxy group and the remaining bonds are bound to an organic substituent.

Examples of the alkoxy group contained in the alkoxysilane compound include, e.g., a methoxy group, an ethoxy group, a protoxy group, a butoxy group, a pentoxy group, a hexatoxy group, etc. The alkoxysilane compound may be included as a dimer in the thermally conductive composition.

Among the alkoxysilane compounds, the alkoxysilane compound containing at least any one of the methoxy group and the ethoxy group is preferable from a viewpoint of availability. The number of the alkoxy groups contained in the alkoxysilane compound is preferably 2 or 3 from a viewpoint of compatibility and solubility in the composition, and more preferably 3. It is preferable that the alkoxysilane compound is specifically at least one selected from a trimethoxysilane compound, a triethoxysilane compound, a dimethoxysilane compound, and a diethoxysilane compound.

Examples of a functional group contained in the organic substituent, which the alkoxysilane compound contains, include, e.g., an acryloyl group, an alkyl group, a carboxyl group, a vinyl group, a methacrylic group, an aromatic group, an amino group, an isocyanate group, an isocyanurate group, an epoxy group, a hydroxyl group, and a mercapto group. Here, when the platinum catalyst is used as the curing catalyst for the thermally conductive composition, it is preferable to select an alkoxysilane compound that is difficult to give effect on the curing reaction of the organopolysiloxane. Specifically, when using an addition-reaction type organopolysiloxane using the platinum catalyst, it is preferable that the organic substituent of the alkoxysilane compound does not contain the amino group, the isocyanate group, the isocyanurate group, the hydroxyl group, or the mercapto group.

It is preferable that the alkoxysilane compound includes an alkylalkoxysilane compound containing the alkyl group bound to the silicon atom, i.e., the alkoxysilane compound containing the alkyl group as the organic substituent, from the viewpoint of improving the workability and other factors. Therefore, a dialkyl dialkoxysilane compound and an alkyl trialkoxysilane compound are preferable, inter alia, the alkyl trialkoxysilane compound is preferable.

The number of carbons of the alkyl group bound to the silicon atom should be, e.g., 1 to 16. In trialkoxysilane compounds such as the trimethoxysilane compound and the triethoxysilane compound, the number of carbons of the above alkyl group is preferably 6 or more, more preferably 8 or more, and preferably 12 or less, more preferably 10 or less.

On the other hand, in dialkoxysilane compounds such as the dimethoxysilane compound and the triethoxysilane compound, the number of carbons of the above alkyl group should be 1 or more, preferably 10 or less, more preferably 6 or less, even more preferably 4 or less.

Examples of alkyl group-containing alkoxysilane compounds include, e.g., methyltrimethoxysilane, dimethyldimethoxysilane, diethyldimethoxysilane, trimethylmethoxysilane, methyltriethoxysilane, dimethyldiethoxysilane, ethyltrimethoxysilane, n-propyltrimethoxysilane, di-n-propyldimethoxysilane, di-n-propyldiethoxysilane, isobutyltrimethoxysilane, isobutyltriethoxysilane, isobutyltrimethoxysilane, isobutyltriethoxysilane, n-hexyltrimethoxysilane, n-hexyltriethoxysilane, methylcyclohexyldimethoxysilane, methylcyclohexyldiethoxysilane, n-octyltrimethoxysilane, n-octyltriethoxysilane, n-decyltrimethoxysilane, n-decyltriethoxysilane, etc.

Among the alkyl group-containing alkoxysilane compounds, from the viewpoint of improving the workability and the like, the n-decyltrimethoxysilane, the dimethyldimethoxysilane, and the n-octyltriethoxysilane are preferable, and the n-decyltrimethoxysilane is more preferable.

In the thermally conductive composition, a content of the alkoxysilane compound with respect to 100 parts by mass of the silicone-based materials, is preferably 0.1 to 10 parts by mass, more preferably 0.5 to 5 parts by mass, even more preferably 1 to 3 parts by mass. When the content of the alkoxysilane compound is these lower limits or more, it is easier to lower the viscosity, to make the workability good. When the content of the alkoxysilane compound is these upper limits or less, an amount of a volatile component remaining after curing does not increase more than necessary, thereby minifying changes in physical properties of the cured product over time.

<Thixotropic agent>

It is preferable that the thermally conductive composition of the present invention includes a thixotropic agent. Including the thixotropic agent allows lowered viscosity by stirring or the like during use, even if the thermally conductive composition has high viscosity in storage, resulting in good fillability and application properties to an adherend.

As the thixotropic agent, an inorganic thixotropic agent such as fumed silica, calcium carbonate, and alumina, and an organic thixotropic agent such as a hydrogenated castor oil and stearic acid amide, can be used. From a viewpoint of thermal stability, the inorganic thixotropic agent is preferable, and inter alia, the fumed silica or the alumina is preferable. The inorganic thixotropic agent is preferably a hydrophobic inorganic thixotropic agent that is surface-treated with a silane coupling agent or the like, more preferably surface-treated hydrophobic fumed silica or surface-treated hydrophobic alumina.

A content of the thixotropic agent is preferably 0.5 to 10 parts by mass, more preferably 1 to 5 parts by mass, with respect to 100 parts by mass of the silicone-based materials. When the content of the thixotropic agent is these lower limits or more, precipitation of the thermally conductive filler is suppressed, to improve the storage stability of the thermally conductive composition. When the content of the thixotropic agent is these upper limits or less, the fillability and the application properties of the thermally conductive composition are enhanced.

In the thermally conductive composition of the present invention, a variety of additives can be included. Examples of the additives include, e.g., a catalyst, a dispersant, a fire retardant, a plasticizer, an antioxidant, a colorant, etc.

A form of the thermally conductive composition of the present invention may be any of a one-component type, or a two-component type in which a first agent and a second agent are combined together, but the two-component type is preferable from the viewpoint of storage stability.

In the two-component type thermally conductive composition, a mass ratio of the second agent to the first agent (the second agent / the first agent) is preferably 1 or a value close to 1, specifically, preferably 0.9 to 1.1, more preferably 0.95 to 1.05. In this way, setting the mass ratio of the second agent to the first agent at 1 or the value close to 1 facilitates preparation of the thermally conductive composition. In addition, in the two-component type thermally conductive composition, a viscosity ratio of the second agent to the first agent (the second agent / the first agent) is also preferably 1 or a value close to 1, specifically, preferably 0.5 to 2.0, more preferably 0.8 to 1.2. In this way, setting the mass ratio of the second agent to the first agent at 1 or the value close to 1 facilitates uniform mixture of the thermally conductive composition. Methods for adjusting the mass ratio and the viscosity ratio will be described later.

The two-component type thermally conductive composition is more specifically one in which the first agent includes the (A) organopolysiloxane containing at least two alkenyl groups (A component) (base resin) and the second agent includes the (B) hydrogenorganopolysiloxane containing at least two hydrosilyl groups (B component) (curing agent).

It is preferable that the addition reaction catalyst is included in the first agent and not in the second agent. Doing so provides the first agent and the second agent with excellent storage stability before mixing and accelerated reaction after the mixing, to be cured quickly, thus being able to make various properties of the thermally conductive member obtained by curing good. A factor therefor is not certain, but it is inferred that the addition reaction catalyst such as a platinum catalyst falls into a state where it is coordinated to the alkenyl group, which is an addition reaction site of the (A) component, and the curing proceeds easily.

The (C) thermally conductive filler should be included in at least any one of the first agent and the second agent, but is preferably included in both the first agent and the second agent. When the (C) thermally conductive filler is included in both the first agent and the second agent, it becomes easy to mix the first agent and the second agent. In addition, since the mass ratio and the viscosity ratio of the second agent to the first agent can be set at 1 or the values close to 1 when preparing the thermally conductive composition, making it easier to use as the two-component type.

In addition, it is preferable that the second agent includes the (A) component. Including the (A) component which is the base resin in addition to the (B) component which is the curing agent in the second agent, facilitates adjustment of the mass ratio and the viscosity ratio of the second agent to the first agent to 1 or the values close to 1 when preparing the thermally conductive composition. On the other hand, the first agent should not include the (B) component which is the curing agent.

In addition, it is preferable that the second agent includes the (D) reaction rate controlling agent; and it is preferable that the first agent does not include the (D) reaction rate controlling agent.

[Thermally Conductive Member]

Curing the thermally conductive composition of the present invention can form the thermally conductive member. Hardness of the thermally conductive member (i.e., the cured product of the thermally conductive composition) is, e.g., 20-70, in terms of a value that is measured by a type E durometer of JIS K 6253 (hereinafter referred to as "E hardness").

Thermal conductivity of the thermally conductive member (i.e., the cured product of the thermally conductive composition) is preferably 1.0 W/m.K or more, more preferably 1.5 W/m.K or more, and even more preferably 2.0 W/m.K or more. Setting it at these lower limits or more provides favorable thermally conductive properties. Therefore, when it is used as, e.g., a gap filler in a battery cell module, it is possible to efficiently transfer heat generated from a battery cell to a module housing through the gap filler and to suppress an excessive increase in a temperature of the battery cell. The thermally conductive member is better when it has a higher thermal conductivity, but practically, the thermal conductivity is, e.g., 7 W/m.K or less.

[Battery Module]

A battery module according to the present invention comprises the gap filler composed of the thermally conductive member, a plurality of the battery cells, and the module housing for storing the plurality of the battery cells, the gap filler being arranged inside the module housing.

The gap filler composed of the thermally conductive member is filled between the battery cells themselves, and between the battery cells and the module housing, and the gap filler thus filled adheres to the battery cells and the module housing. Thereby, the gap filler between the battery cells has a function of keeping a clearance state between the battery cells. Further, the gap filler between the battery cells and the module housing has functions of adhering to both the battery cells and the module housing, and transferring the heat generated in the battery cells to the module housing.

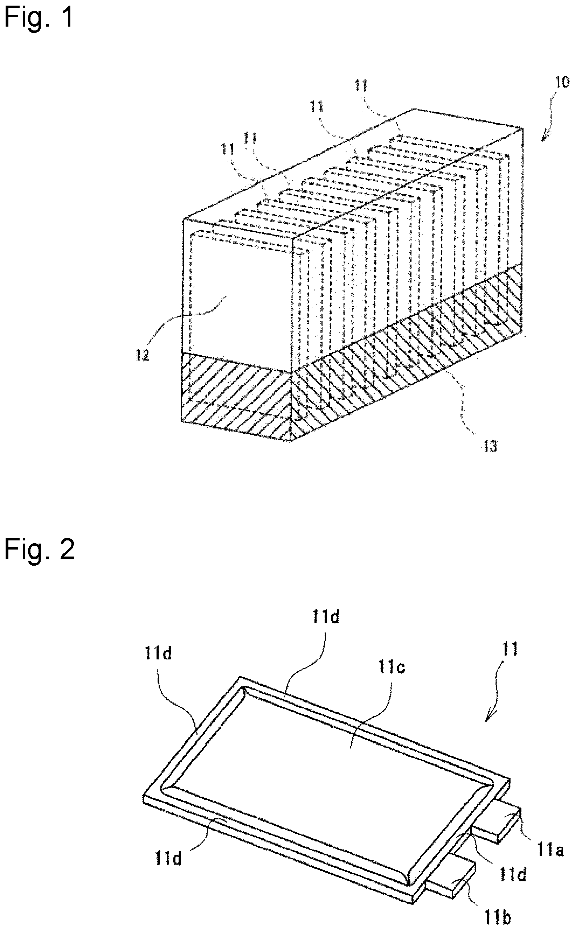

Fig. 1 shows a specific configuration of the battery module. Fig. 2 shows a specific configuration of each battery cell. As shown in Fig. 1, a plurality of battery cells 11 is arranged within a battery module 10. Each battery cell 11 is laminated and sealed in a flexible exterior film and has an overall shape of a flat body in which thickness is thin compared with magnitude of height or width. In such a battery cell 11, as shown in Fig. 2, a positive electrode 11a and a negative electrode 11b appear outside, and a central portion 11c of the flat surface is formed to be thicker than crimped end portions 11d.

As shown in Fig. 1, each of the battery cells 11 is arranged such that the flat surfaces thereof face each other. In the configuration of Fig. 1, a gap filler 13 is not filled such that the whole of the plurality of battery cells 11, which are stored in a module housing 12, are covered. The gap filler 13 is filled so as to fill gaps present in a part (a bottom-side part) of the inside of the module housing 12. The gap filler 13 is filled between the battery cells 11 each other, between the battery cell 11 and the module housing 12, and adheres to the surfaces of the battery cells 11 and the inner surfaces of the module housing 12 in this part.

The gap filler 13 filled between the battery cells 11 each other is adhered to the surfaces of both of battery cells 11, but the gap filler 13 itself has the above-described hardness and thereby has moderate elasticity and flexibility, which makes it possible to mitigate strain and deformation caused by an external force even if the external force is applied to displace a spacing between the battery cells 11 each other. Therefore, the gap filler 13 has the function of keeping the clearance state between the battery cells 11 each other.

The gap filler 13 filled into the gap between the battery cell 11 and the inner surface of the module housing 12 also closely adheres to the surfaces of the battery cell 11 and the inner surface of the module housing 12. As a result, the heat generated in the inside of the battery cell 11 is transferred through the gap filler 13 adhering to the surface of the battery cell 11 to the inner surface of the module housing 12 closely adhering to the other surface of the gap filler 13.

Formation of the gap filler 13 into the battery module 10 should be done by filling and applying a liquid thermally conductive composition using a general dispenser and then curing the liquid thermally conductive composition. In addition, since the thermally conductive composition of the present invention has excellent low viscosity maintaining property and curability over time as described above, the workability at forming the gap filler 13 is excellent, and the gap filler 13 is excellent in the reliability as the product.

When forming the gap filler 13, it is preferable that the two-component type thermally conductive composition is used as described above. The two-component type is easy to be stored, and if mixed just before use, it is difficult to cure during an operation of applying with the dispenser and can be cured quickly after application. In addition, the application with the dispenser is also preferable in that it allows the liquid thermally conductive composition to fill relatively deep into the housing 12 of the battery module 10.

It is preferable that the gap filler 13 covering the battery cells 11 covers 20 to 40% of each battery cell 11 on one side of the battery cells 11. The coverage of 20% or more provides stable holding of the battery cells 11. In addition, sufficient coverage of the battery cells generating a large amount of heat provides favorable heat dissipation efficiency. On the other hand, the coverage of 40% or less provides efficient dissipation of the heat generated from the battery cells 11, and also prevents an increase in weight and deterioration of workability, and the like. In addition, in order to improve the heat dissipation efficiency, it is preferable that the side of the battery cells 11 where the electrodes 11a, 11b are located is covered with the gap filler 13, and it is more preferable that the whole of the electrodes 11a, 11b is covered with the gap filler 13. As described above, the battery module 10 allows the heat generated from the battery cells 11 to escape to the module housing 12 through the gap filler 13.

It is also preferable that the gap filler 13 is used for a battery pack provided with a plurality of the battery module 10 inside. The battery pack generally comprises the plurality of the battery modules 10 and a housing of the battery pack in which the plurality of the battery module 10 is stored. In the battery pack, the gap filler 13 can be provided between the battery module 10 and the housing of the battery pack. This allows the heat that is escaped into the module housing 12 as described above to be further escaped to the housing of the battery pack, thereby enabling effective heat dissipation.

Examples

Hereinafter, the present invention will be described in more detail with reference to examples, but the present invention is not limited to these examples.

[Storage Modulus]

After filling a side by side two-component cartridge with 50 cc each of the first agent and the second agent and standing for 24 hours, a static mixer was used to discharge the thermally conductive composition which was a mixture of the first agent and the second agent (1:1 of the mass ratio) on a 25 mm parallel plate of a viscoelasticity measuring apparatus (e.g., ARES-G2 produced by TA Instruments). Immediately after discharging, a gap between the parallel plates was adjusted to 1 mm, and measurement of variation of the storage modulus G' over time was started under the conditions of 35°C, a shear mode, a frequency of 1Hz, and a strain of 10%, to measure the storage modulus G'0 after 600 seconds from the start of the measurement, the storage modulus G'1 after 3,600 seconds from the start of the measurement, and the storage modulus G'2 after 7,200 seconds from the start of the measurement. Since the sample starts curing immediately after discharging, the period from discharging to the start of the measurement was set to 30 seconds.

[Viscosity]

The sample of the thermally conductive composition immediately after preparation (immediately after mixing the first agent and the second agent) was subjected to measurement using a viscometer ("DV2T (spindle SC4-14)" produced by Brookfield Engineering) for 120 seconds at 25°C and the number of revolutions of 10 rpm (a shear rate of 10 rpm), and an average value from 90 to 120 seconds was used as a measurement value.

[Thermogravimetric Measurement]

Setting 50 mg of the reaction rate controlling agent in an aluminum pan (Aluminum macro cell "201-57268-90" produced by Shimadzu Corporation, $\Phi$ 6 in an outer diameter dimension $\times$ 5 mm) and by using a thermogravimetric apparatus ("DTG60" produced by Shimadzu Corporation), under the nitrogen atmosphere and the conditions that the temperature was raised from room temperature (25°C) to 35°C at 4°C/minute of the heating rate and then held at the constant temperature of 35°C until 120 minutes had elapsed from the start of raising temperature, the weight after 60 minutes ($W_{60}$) and the weight after 120 minutes ($W_{120}$) from the start of the measurement were respectively measured, to determine $W_{60}$-$W_{120}$. The aluminum pan was set in the sample chamber as it was without being caulked during the measurement.

[Compressive Load Test]

After filling the side by side two-component cartridge of 50 cc each with the first agent and the second agent and standing for 24 hours, the static mixer was used to discharge 5.75 $\pm$ 0.25 g of the thermally conductive composition which was the mixture of the first agent and the second agent (1:1 of the mass ratio) on a stage for the compression test of a universal testing machine (e.g., Strograph produced by Toyo Seiki Seisaku-Sho Ltd.), to perform the compression test on that discharge.
The initial compressive load was determined by immediately performing the compression test with respect to the discharge which was discharged. The compressive load after being left to stand at 35°C for 1 hour was determined by performing the compression test after the discharge is left to stand at 35°C for 1 hour. The compressive load after being left to stand at 18°C for 18 hours was determined by performing the compression test after the discharge is left to stand at 18°C for 18 hours.
With respect to the compression test, the discharge was compressed by the plunger of 40 mmΦ (the jig for the compression test) at 60 mm/minute of the compression speed, and when the gap between the jigs was compressed to 0.665 mm, the load value was read, which was used as the compressive load. The temperatures at which the compression tests were performed were 35°C when measuring the compressive load after being left to stand at 35°C for 1 hour, 18°C when measuring the compressive load after being left to stand at 18°C for 18 hours, and 22°C when measuring the initial compressive load.

[Curing Confirmation Test after being left to stand at 18°C for 18 Hours].

After filling the side by side two-component cartridge of 50 cc each with the first agent and the second agent and standing for 24 hours, the static mixer was used to discharge a small amount of the sample (the thermally conductive composition which was the mixture of the first agent and the second agent (1:1 of the mass ratio)) on a release treated surface of a PET film (SG2 produced by PANAC Co., Ltd.), which was release treated with silicone. From above the sample, another sheet of the PET film (SG2 produced by PANAC Co., Ltd.) was set so that the release treated surface was in contact with the sample, and squashed and fixed so that a thickness of the sample was uniformly 2 mm. After leaving a test piece thus prepared (a test piece in which the sample was sandwiched between two sheets of PET films) in a horizontal state in a constant temperature oven of 18°C for 18 hours, the upper PET film was peeled off, and it was judged that an outer periphery was cured if the sample was peeled off cleanly without following the upper PET film, and that the outer periphery was not cured, on the contrary, if the sample was not peeled off cleanly pulled to the upper film. Further, when the outer periphery was cured, the thickness of the cured portion was measured.

(Evaluation)

A: the outer periphery was cured.
B: the outer periphery was not cured.

[Curability Test]

After filling the side by side two-component cartridge of 50 cc each with the first agent and the second agent and standing for 24 hours, the static mixer was used to discharge 16 g of the sample (the thermally conductive composition which was the mixture of the first agent and the second agent (1:1 of the mass ratio)) on an aluminum plate. The sample was squashed and fixed by a glass plate from above so that the thickness of the sample was uniformly 2 mm. To record the shape and position of the sample, marking was performed along the outer periphery of the sample on the glass plate with an oily magic marker. After leaving the test piece thus prepared (the test piece in which the sample was sandwiched between two PET films) in the horizontal state in the constant temperature oven of 18°C for 18 hours, the test piece was stored in the constant temperature oven of 40°C for 24 hours in a vertically standing state. The sample sandwiched between the aluminum plate and the glass plate was observed for any change in the shape and the position before and after storage at 40°C, it was judged that the sample was acceptance "A" if there was no change, and that the sample was nonacceptance "B" if there was a change. In the sample whose periphery did not cure in the above test to confirm curing after being left to stand at 18°C for 18 hours, displacement behavior to a downward of the sample was observed after storage at 40°C by this test.

[Workability Evaluation]

Viscosity I immediately after the preparation of the thermally conductive composition (immediately after mixing the first agent and the second agent), and viscosity II after being left to stand at 25°C for 6 hours after the preparation were measured, and it was evaluated that the workability was good and as "A" if the viscosity II / the viscosity I was less than 2, and the workability was poor and as "B" if the viscosity II / the viscosity I was 2 or more.

[Judgment (Comprehensive Evaluation)]

It was judged that the case of "A" in both the curability test and the workability test was the acceptance, and that the case of "B" in at least one of the curability test and the workability test was the nonacceptance.

[Examples 1 to 8, Comparative Examples 1 to 5]

The first agent and the second agent were prepared as follows and the various evaluations described above were performed.

(The first agent)

A first liquid including the (A) organopolysiloxane containing at least two alkenyl groups and a trace amount of the addition reaction catalyst (the platinum catalyst); dimethyl polysiloxane (the dimethyl silicone oil); the n-decyltrimethoxysilane; the thermally conductive filler; and the thixotropic agent were adjusted to the formulation shown in Table 1, to make the first agent.

(The second agent)

A second liquid including the (A) organopolysiloxane containing at least two alkenyl groups and the (B1) hydrogenorganopolysiloxane containing at least two hydrosilyl groups (a proportion of the hydrosilyl group of 1 mmol/g or less); the (B2) hydrogenorganopolysiloxane containing the hydrosilyl group at a proportion of 4 mmol/g ; the dimethylpolysiloxane (the dimethyl silicone oil); the n-decyltrimethoxysilane; the reaction rate controlling agent; the thermally conductive filler; and the thixotropic agent were adjusted to the formulation shown in Table 1, to make the second agent.

As the reaction rate controlling agent, used was the reaction rate controlling agent having the silicon atom and having the acetylene moiety. $W_{60}$-$W_{120}$ in the thermogravimetric measurement of the reaction rate controlling agent was 0.49 mg.

Table 1

| | | | Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|---|---|---|
| | | | First agent | Sec-ond agent | First agent | Sec-ond agent | First agent | Sec-ond agent | First agent | Sec-ond agent | First agent | Sec-ond agent | First agent | Sec-ond agent | First agent | Sec-ond agent | First agent | Sec-ond agent |
| Silicone-based materi-als | | First liquid including (A) component and a trace amount of addition reaction catalyst | 60 | | 60 | | 70 | | 70 | | 70 | | 70 | | 60 | | 60 | |
| | | Second liquid including (A) component and (B1) component | | 60 | | 60 | | 70 | | 70 | | 70 | | 70 | | 60 | | 60 |
| | | (B2) component, concentration of hydrosilyl group: 4 mmol/g | | 1 | | 1 | | 5 | | 5 | | 4 | | 3 | | 4 | | 5 |
| | | Non-reactive silicone: dimethyl polysiloxane (viscosity: 10 cSt) | 39 | 38 | 39 | 38 | 29 | 24 | 29 | 24 | 29 | 25 | 29 | 26 | 39 | 35 | 39 | 34 |
| | Liquid additives | n-Decyltrimethoxysilane | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | (D) reaction rate controlling agent | | 0.40 | | 0.40 | | 0.40 | | 0.50 | | 0.5 | | 0.5 | | 0.35 | | 0.35 |

| | | | | Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|---|---|---|---|
| | | | | First agent | Second agent | First agent | Second agent | First agent | Second agent | First agent | Second agent | First agent | Second agent | First agent | Second agent | First agent | Second agent | First agent | Second agent |
| Thermally conductive composi-tions (parts by mass) | Fillers | (C) thermal-ly conduc-tive fillers | Aluminum ox-ide (spheri-cal, average particle size: 8 μm) | 100 | 100 | 100 | 100 | 100 | 100 | 100 | 100 | 100 | 100 | 100 | 100 | 100 | 100 | 100 | 100 |
| | | | Aluminum ox-ide (spheri-cal, average particle size: 40 μm) | 400 | 400 | 400 | 400 | 400 | 400 | 400 | 400 | 400 | 400 | 400 | 400 | 400 | 400 | 400 | 400 |
| | | | Aluminum hy-droxide (aver-age particle size: 1 μm) | 120 | 120 | 120 | 120 | 120 | 120 | 120 | 120 | 120 | 120 | 120 | 120 | 120 | 120 | 120 | 120 |
| | | | Aluminum hy-droxide (aver-age particle size: 10 μm) | 100 | 100 | 100 | 100 | 100 | 100 | 100 | 100 | 100 | 100 | 100 | 100 | 100 | 100 | 100 | 100 |
| | | | Aluminum hy-droxide (aver-age particle size: 90 μm) | 265 | 265 | 265 | 265 | 265 | 265 | 265 | 265 | 265 | 265 | 265 | 265 | 265 | 265 | 265 | 265 |

EP 4 317 322 A1

14

(continued)

| | | Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|---|---|
| | | First agent | Second agent | First agent | Second agent | First agent | Second agent | First agent | Second agent | First agent | Second agent | First agent | Second agent | First agent | Second agent | First agent | Second agent |
| Thixotropic agent | Hydrophobic fumed silica surface-treated with octylsilane (specific surface area: 150m²/g) | 3 | 3 | | | | | | | | | | | | | | |
| | Hydrophobic alumina surface-treated with octylsilane | | | 3.5 | 3.5 | 3.5 | 3.5 | 3.5 | 3.5 | 3 | 3 | 3 | 3 | 3 | 3 | 3 | 3 |

15

| | | | Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|---|---|---|
| | | | First agent | Second agent | First agent | Second agent | First agent | Second agent | First agent | Second agent | First agent | Second agent | First agent | Second agent | First agent | Second agent | First agent | Second agent |
| Properties of thermally conductive compositions | Viscosity (Pa·s) | Under room temperature (25°C) and number of revolutions of 10 rpm | 175 | | 193 | | 198 | | 200 | | 215 | | 218 | | 170 | | 168 | |
| | Storage modulus G' (Pa) | Storage modulus G'0 after 600 seconds at 35°C | 70 | | 75 | | 67 | | 78 | | 50 | | 99 | | 86 | | 51 | |
| | | Storage modulus G'1 after 3,600 seconds at 35°C | 812 | | 856 | | 1593 | | 703 | | 480 | | 793 | | 1376 | | 628 | |
| | | Storage modulus G'2 after 7,200 seconds at 35°C | 13050 | | 12110 | | 16236 | | 5187 | | 4376 | | 6110 | | 14156 | | 10899 | |

EP 4 317 322 A1

| | | | Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|---|---|---|
| | | | First agent | Sec-ond agent | First agent | Sec-ond agent | First agent | Sec-ond agent | First agent | Sec-ond agent | First agent | Sec-ond agent | First agent | Sec-ond agent | First agent | Sec-ond agent | First agent | Sec-ond agent |
| Evaluation | Compres-sive load test | Initial com-pressive load A (N) | 169 | | 173 | | 178 | | 178 | | 192 | | 195 | | 161 | | 161 | |
| | | Compressive load B (N) after a lapse of 1 hour at 35°C | 174 | | 200 | | 322 | | 258 | | 241 | | 240 | | 191 | | 208 | |
| | | Compressive load C (N) after a lapse of 18 hours at 18°C | 1474 | | 2955 | | 4967 | | 2492 | | 2824 | | 2682 | | 3311 | | 3784 | |
| | | 100×B/A (%) | 103% | | 116% | | 181% | | 145% | | 126% | | 123% | | 119% | | 129% | |
| | | 100×C/A (%) | 872% | | 1708% | | 2798% | | 1400% | | 1471% | | 1379% | | 2063% | | 2350% | |
| | 18°C/18 hours cur-ing confir-mation test | Confirmation of perimeter curing by visual inspection | A | | A | | A | | A | | A | | A | | A | | A | |
| | | Thickness of cured portion (mm) | 1 mm | | 1 mm | | 0.5-1 mm | | 0.5 mm | | 0.5 mm | | 0.5 mm | | 1.0 mm | | 1.0 mm | |
| | Curability test | | A | | A | | A | | A | | A | | A | | A | | A | |
| | Workability | Viscosity change after 6 hours at 25°C | A | | A | | A | | A | | A | | A | | A | | A | |

EP 4 317 322 A1

EP 4 317 322 A1

(continued)

| | | Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|---|---|
| | | First agent | Second agent | First agent | Second agent | First agent | Second agent | First agent | Second agent | First agent | Second agent | First agent | Second agent | First agent | Second agent | First agent | Second agent |
| Judgement | Acceptance / nonacceptance | Acceptance | | Acceptance | | Acceptance | | Acceptance | | Acceptance | | Acceptance | | Acceptance | | Acceptance | |

EP 4 317 322 A1

Table 2

| | | | Comparative Example 1 | | Comparative Example 2 | | Comparative Example 3 | | Comparative Example 4 | | Comparative Example 5 | |
|---|---|---|---|---|---|---|---|---|---|---|---|---|
| | | | First agent | Second agent | First agent | Second agent | First agent | Second agent | First agent | Second agent | First agent | Second agent |
| Thermally conductive | Silicone-based materials | First liquid including (A) component and a trace amount of addition reaction catalyst | 70 | | 70 | | 70 | | 70 | | 65 | |
| | | Second liquid including (A) component and (B1) component | | 70 | | 70 | | 70 | | 70 | | 65 |
| | | (B2) component, concentration of hydrosilyl group: 4 mmol/g | | 5 | | 5 | | 5 | | 5 | | 10 |
| | | Non-reactive silicone: dimethyl polysiloxane (viscosity: 10 cSt) | 29 | 24 | 29 | 24 | 29 | 24 | 29 | 24 | 29 | 19 |
| | Liquid additives | n-Decyltrimethoxysilane | 1.5 | 1.5 | 1.5 | 1.5 | 1.5 | 1.5 | 1.5 | 1.5 | 1.5 | 1.5 |
| | | (D) reaction rate controlling agent | | 0.20 | | 0.30 | | 0.60 | | 0.90 | | 0.80 |

19

| compositions (parts by mass) | Fillers | (C) thermally conductive fillers | Aluminum oxide (spherical, average particle size: 8 μm) | Comparative Example 1 | | Comparative Example 2 | | Comparative Example 3 | | Comparative Example 4 | | Comparative Example 5 | |
|---|---|---|---|---|---|---|---|---|---|---|---|---|---|
| | | | | First agent | Second agent | First agent | Second agent | First agent | Second agent | First agent | Second agent | First agent | Second agent |
| | | | Aluminum oxide (spherical, average particle size: 8 μm) | 100 | 100 | 100 | 100 | 100 | 100 | 100 | 100 | 100 | 100 |
| | | | Aluminum oxide (spherical, average particle size: 40 μm) | 400 | 400 | 400 | 400 | 400 | 400 | 400 | 400 | 400 | 400 |
| | | | Aluminum hydroxide (average particle size: 1 μm) | 120 | 120 | 120 | 120 | 120 | 120 | 120 | 120 | 120 | 120 |
| | | | Aluminum hydroxide (average particle size: 10 μm) | 100 | 100 | 100 | 100 | 100 | 100 | 100 | 100 | 100 | 100 |
| | | | Aluminum hydroxide (average particle size: 90 μm) | 265 | 265 | 265 | 265 | 265 | 265 | 265 | 265 | 265 | 265 |
| | | Thixotropic agent | Hydrophobic fumed silica surface-treated with octylsilane (specific surface area: 150m$^2$/g) | | | | | | | | | | |
| | | | Hydrophobic alumina surface-treated with octylsilane | 3.5 | 3.5 | 3.5 | 3.5 | 3.5 | 3.5 | 2 | 2 | 3 | 3 |

EP 4 317 322 A1

| Properties of thermally conductive compositions | | | Comparative Example 1 | | Comparative Example 2 | | Comparative Example 3 | | Comparative Example 4 | | Comparative Example 5 | |
|---|---|---|---|---|---|---|---|---|---|---|---|---|
| | | | First agent | Second agent | First agent | Second agent | First agent | Second agent | First agent | Second agent | First agent | Second agent |
| | Viscosity (Pa·s) | Under room temperature (25°C) and number of revolutions of 10 rpm | 206 | | 200 | | 207 | | 160 | | 168 | |
| | Storage modulus G' (Pa) | Storage modulus G'0 after 600 seconds at 35°C | 76 | | 79 | | 71 | | 59 | | 63 | |
| | | Storage modulus G'1 after 3,600 seconds at 35°C | 44548 | | 6361 | | 658 | | 83 | | 151 | |
| | | Storage modulus G'2 after 7,200 seconds at 35°C | 182510 | | 62560 | | 4312 | | 758 | | 1279 | |
| | Compressive load test | Initial compressive load A (N) | 185 | | 179 | | 185 | | 151 | | 160 | |
| | | Compressive load B (N) after a lapse of 1 hour at 35°C | 2049 | | 478 | | 218 | | 158 | | 175 | |
| | | Compressive load C (N) after a lapse of 18 hours at 18°C | Not measurable | | Not measurable | | 1498 | | 227 | | 313 | |
| | | 100×B/A (%) | 1107% | | 267% | | 118% | | 105% | | 110% | |
| | | 100×C/A (%) | - | | - | | 810% | | 150% | | 196% | |

EP 4 317 322 A1

(continued)

| | | | Comparative Example 1 | | Comparative Example 2 | | Comparative Example 3 | | Comparative Example 4 | | Comparative Example 5 | |
|---|---|---|---|---|---|---|---|---|---|---|---|---|
| | | | First agent | Second agent | First agent | Second agent | First agent | Second agent | First agent | Second agent | First agent | Second agent |
| Evaluation | 18°C/18 hours curing confirmation test | Confirmation of perimeter curing by visual inspection | A | | A | | B | | B | | B | |
| | | Thickness of cured portion (mm) | Fully cured | | 5 mm | | Uncured | | Uncured | | Uncured | |
| | Curability test | | A | | A | | B | | B | | B | |
| | Workability | Viscosity change after 6 hours at 25°C | B | | B | | A | | A | | A | |
| Judgement | | Acceptance / nonacceptance | Nonacceptance | | Nonacceptance | | Nonacceptance | | Nonacceptance | | Nonacceptance | |

It was found that the thermally conductive composition of each example in which the storage modulus G'1 is 2,000 Pa or less and the storage modulus G'2 is 4,350 Pa or more had good results in both the test with respect to the curability and the test for confirming the workability, indicating that the workability was good in a wide temperature range and that the reliability as the product was maintained.

In contrast, in the thermally conductive compositions of Comparative Examples 1 to 2, which did not satisfy the requirement of 2,000 Pa or less of the storage modulus G'1, the results in the test for confirming the workability were poor. In addition, it was found that in the thermally conductive compositions of Comparative examples 3 to 5, which did not satisfy the requirement of 4,350 Pa or more of the storage modulus G'2, the results in test with respect to the curability were poor, and the reliability as the product was reduced.

Reference Signs List

10   battery module
11   battery cell
12   housing of battery module (module housing)
13   gap filler

**Claims**

1.  A thermally conductive composition comprising

    (A) an organopolysiloxane containing at least two alkenyl groups,
    (B) a hydrogenorganopolysiloxane containing at least two hydrosilyl groups,
    (C) a thermally conductive filler, and
    (D) a reaction rate controlling agent, wherein

    in measurement using a viscoelasticity measuring apparatus under conditions of 35°C, a shear mode, a frequency of 1 Hz, and a strain of 10%, a storage modulus G'1 after 3,600 seconds from the start of the measurement is 2,000 Pa or less, and a storage modulus G'2 after 7,200 seconds from the start of the measurement is 4,350 Pa or more, and wherein
    viscosity measured at 25°C and the number of revolutions of 10 rpm is 220 Pa·s or less.

2.  The thermally conductive composition according to claim 1, wherein in a compressive load test, a ratio of a compressive load after the composition is left to stand at 35°C for 1 hour to an initial compressive load is 145% or less, and a ratio of the compressive load after the composition is left to stand at 18°C for 18 hours to the initial compressive load is 820% or more.

3.  The thermally conductive composition according to claim 1 or 2, further comprising an alkoxysilane compound.

4.  The thermally conductive composition according to any one of claims 1 to 3, further comprising a thixotropic agent.

5.  A thermally conductive member made by curing the thermally conductive composition according to any one of claims 1 to 4.

6.  A battery module comprising a gap filler composed of the thermally conductive member according to claim 5, a plurality of battery cells, and a module housing for storing the plurality of the battery cells, wherein the gap filler is arranged inside the module housing.

Fig. 1

Fig. 2

## INTERNATIONAL SEARCH REPORT

| | International application No. |
|---|---|
| | **PCT/JP2022/014659** |

**A.    CLASSIFICATION OF SUBJECT MATTER**

*C08L 83/07*(2006.01)i; *C08L 83/05*(2006.01)i; *C09K 5/14*(2006.01)i; *H01M 10/613*(2014.01)i; *H01M 10/651*(2014.01)i; *H01M 10/653*(2014.01)i

FI:    C08L83/07; C08L83/05; C09K5/14 E; H01M10/613; H01M10/651; H01M10/653

According to International Patent Classification (IPC) or to both national classification and IPC

**B.    FIELDS SEARCHED**

Minimum documentation searched (classification system followed by classification symbols)

C08L83/00-83/16; C08K3/00-13/08; C09K5/00-5/20; H01M10/00-10/667

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | JP 2018-27997 A (SHIN-ETSU CHEMICAL CO., LTD.) 22 February 2018 (2018-02-22) claims, examples column (for example, comparison of examples 1-4 and comparative examples 1-3, paragraph [0046]), etc. | 1-6 |
| A | JP 2005-206733 A (SHIN-ETSU CHEMICAL CO., LTD.) 04 August 2005 (2005-08-04) | 1-6 |
| A | WO 2020/213306 A1 (SEKISUI POLYMATECH CO., LTD.) 22 October 2020 (2020-10-22) | 1-6 |
| A | JP 2015-212318 A (SHIN-ETSU CHEMICAL CO., LTD.) 26 November 2015 (2015-11-26) | 1-6 |
| A | JP 2015-59191 A (SHIN-ETSU CHEMICAL CO., LTD.) 30 March 2015 (2015-03-30) | 1-6 |
| A | JP 2015-4043 A (SHIN-ETSU CHEMICAL CO., LTD.) 08 January 2015 (2015-01-08) | 1-6 |
| A | WO 2018/079215 A1 (DOW CORNING TORAY CO., LTD.) 03 May 2018 (2018-05-03) | 1-6 |
| A | JP 2010-144130 A (TAICA CORP.) 01 July 2010 (2010-07-01) | 1-6 |
| A | JP 2010-120979 A (TAICA CORP.) 03 June 2010 (2010-06-03) | 1-6 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **09 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
Information on patent family members

International application No.

**PCT/JP2022/014659**

| Patent document cited in search report | | | Publication date (day/month/year) | Patent family member(s) | | | Publication date (day/month/year) |
|---|---|---|---|---|---|---|---|
| JP | 2018-27997 | A | 22 February 2018 | US | 2018/0051199 | A1 | |
| | | | | claims, examples column (for example, comparison of examples 1-4 and comparative examples 1-3, paragraph [0068]), etc. | | | |
| JP | 2005-206733 | A | 04 August 2005 | KR | 10-2005-0076763 | A | |
| | | | | CN | 1649134 | A | |
| | | | | TW | 200536896 | A | |
| WO | 2020/213306 | A1 | 22 October 2020 | (Family: none) | | | |
| JP | 2015-212318 | A | 26 November 2015 | (Family: none) | | | |
| JP | 2015-59191 | A | 30 March 2015 | US | 2016/0208156 | A1 | |
| | | | | WO | 2015/040777 | A1 | |
| JP | 2015-4043 | A | 08 January 2015 | US | 2016/0060462 | A1 | |
| | | | | WO | 2014/188667 | A1 | |
| WO | 2018/079215 | A1 | 03 May 2018 | US | 2019/0345291 | A1 | |
| | | | | EP | 3533837 | A1 | |
| JP | 2010-144130 | A | 01 July 2010 | (Family: none) | | | |
| JP | 2010-120979 | A | 03 June 2010 | (Family: none) | | | |

Form PCT/ISA/210 (patent family annex) (January 2015)

**REFERENCES CITED IN THE DESCRIPTION**

**Patent documents cited in the description**

- WO 2018173860 A
- JP 2005206733 A